# EUROPÄISCHE PATENTSCHRIFT

(11) **EP 1 321 221 B1**
(45) Veröffentlichungstag und Bekanntmachung des Hinweises auf die Patenterteilung: **07.08.2013**
(21) Anmeldenummer: 02406053.5
(22) Anmeldetag: 03.12.2002
(51) Int. Cl.: B23Q 1/00, B23B 31/107, B23Q 3/18, B23Q 7/14

(54) **Spanneinrichtung mit einem Spannfutter und einem lösbar daran fixierbaren Werkstückträger**
Clamping device with a chuck and a workpiece holder to be releasably held therein
Dispositif de fixation avec mandrin de serrage et porte-pièce pouvant être fixé de façon amovible à celui-ci

(30) Priorität: 19.12.2001 CH 20012318
(43) Veröffentlichungstag der Anmeldung: 25.06.2003
(73) Patentinhaber: Erowa AG, 5734 Reinach (CH)
(72) Erfinder: Fries, Karl, 5734 Reinach (CH)
(74) Vertreter: Rottmann, Maximilian

(56) Entgegenhaltungen:
- EP-A- 1 044 760
- DE-A- 3 713 023
- DE-A- 4 110 857
- DE-U- 20 009 117
- US-A- 4 736 659
- US-A- 5 065 991
- US-A- 5 415 384
- US-A- 5 722 806
- US-A- 5 918 870
- US-A- 5 961 261
- US-A- 6 161 826

## Beschreibung

Die vorliegende Erfindung bezieht sich auf eine gemäss dem Oberbegriff des Anspruchs 1 ausgebildete Spanneinrichtung, die zum Beispiel aus dem Dokument EP 1 044 760 4 bekannt ist.

Derartige Spanneinrichtungen werden bevorzugt zum positionsdefinierten Aufspannen eines mit einem Werkstück bzw. mehrerer Werkstücke versehenen Werkstückträgers im Arbeitsbereich einer Bearbeitungsmaschine eingesetzt. Das Spannfutter wird üblicherweise im Arbeitsbereich der Bearbeitungsmaschine fixiert, während der mit einem Spannzapfen versehene Werkstückträger lösbar am Spannfutter fixierbar ist.

Um unterschiedlich grosse Werkstückträger festspannen zu können, sind sogenannte Palletiersysteme bekannt, die mehrere Spannfutter -üblicherweise 2, 4, 6, oder 8-aufweisen. Im Normalfall wird an diesen Spannfuttern ein Werkstückträger festgespannt, der, je nach Grösse, mit 2, 4, 6, oder 8 Spannzapfen versehen ist. In Einzelfällen kann es vorkommen, dass der Werkstückträger mit einer ungeraden Anzahl von Spannzapfen versehen ist. Da das einzelne Spannfutter im Normalfall weder eine Verdrehsicherung noch Mittel zum Bestimmen der Winkellage um die Z-Achse aufweist, kann es vorteilhaft sein, eines oder mehrere der Spannfutter mit Positionier-Mitteln zu versehen, die nebst der X- und Y- Position auch die Winkellage um die Z-Achse festlegen, so dass ggf. auch Werkstückträger (Paletten) mit einem einzelnen Spannzapfen Lage- und Winkelgerecht am Spannfutter festgespannt werden können. Es versteht sich, dass in diesem Fall die Werkstückträger ebenfalls mit Positionier-Mitteln versehen sein müssen, die mit den vorgängig genannten Positionier-Mitteln am Spannfutter korrespondieren.

Eine Schwierigkeit insbesondere bei grossen und schweren Werkstückträgern besteht darin, dass das Ausrichten der am Werkstückträger angeordneten Zentrierzapfen auf die jeweilige Öffnung des Spannfutters relativ schwierig ist, da nur ein geringes Spiel zwischen der Spannzapfenvorderseite und der Öffnung des Spannfutters besteht. Ausserdem besteht die Gefahr, dass der Spannzapfen wie auch die Öffnung beim Einführen des Spannzapfens beschädigt werden.

Nebst Spanneinrichtungen, bei denen der Spannzapfen mit einem zylindrischen Abschnitt zum Ausrichten in der Bohrung des Spannfutters versehen ist, sind auch Spanneinrichtungen bekannt, bei denen das Spannfutter mit einer konischen Zentrierfläche für ein spielfreies Ausrichten des Spannbolzens versehen ist. Beispielsweise ist aus der EP 1 044 760 eine derartige Spanneinrichtung bekannt. Zur Zentrierung des Spannbolzens ist bei dieser Spanneinrichtung das Spannfutter mit einer konischen Zentrierfläche für den Spannbolzen versehen. Die Gehäusewandung des Spannfutters ist im Bereich der Zentrierfläche axial federnd ausgebildet, indem hinter der Zentrierfläche ein radialer Einschnitt angebracht ist. Dadurch wird eine elastisch nachgiebiger Bereich geschaffen, der nach dem Positionieren des Spannzapfens ein Einziehen des Spannzapfens und ein Verschieben desselben in Z-Richtung ermöglicht. Derart elastisch nachgiebige Bereiche haben sich insbesondere bei kleinen Spannfuttern bewährt. Allerdings wird bei Spannfuttern, die zur Aufnahme von grossen und schweren Werkstückträgern vorgesehen sind, das Spannfutter durch einen solchen Einschnitt nachhaltig geschwächt. Zudem kann in dem Bereich um den Einschnitt herum kein Z-Anschlag bzw. keine Anschlagfläche vorgesehen werden, da das Spannfutter im genannten Bereich in Einzugsrichtung des Spannbolzens zu nachgiebig ist. Ausserdem besteht die Gefahr, dass beim Positionieren des Spannzapfens der elastisch nachgiebige Bereich durch den einzuführenden Spannzapfen beschädigt wird, da der elastisch nachgiebige Bereich weder in axialer noch in radialer Richtung hohe Kräfte aufnehmen kann.

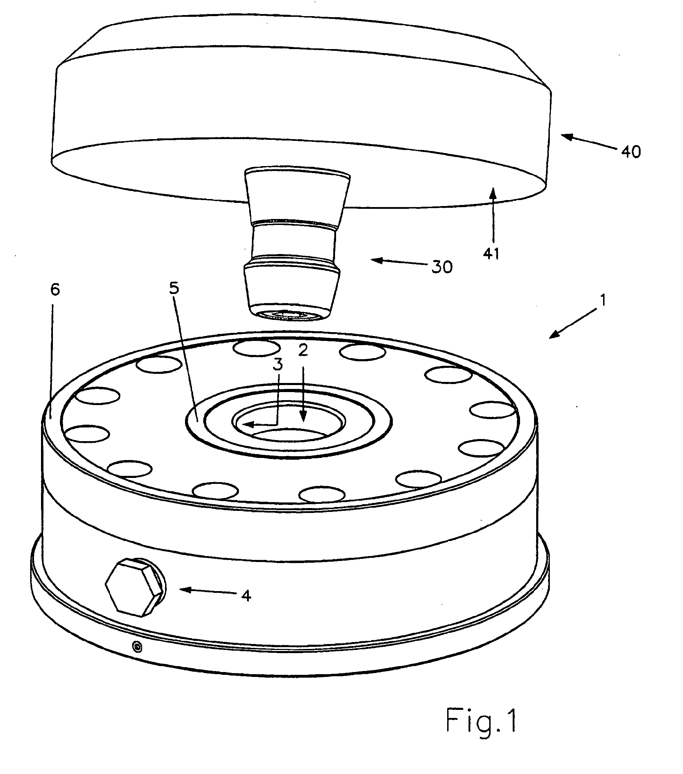

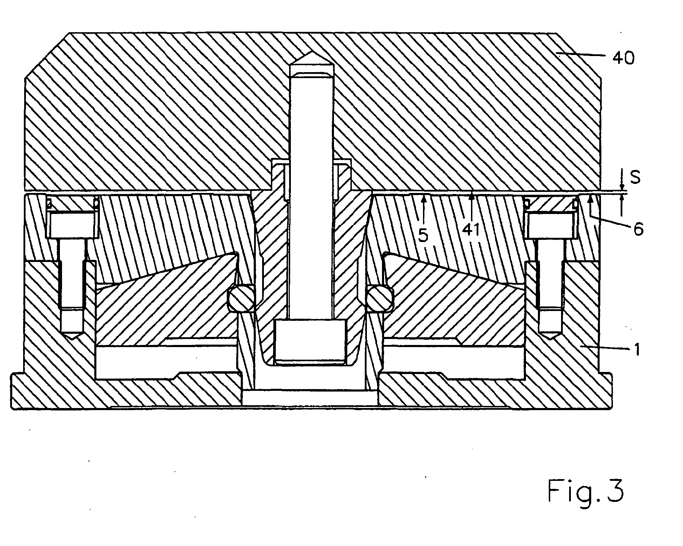

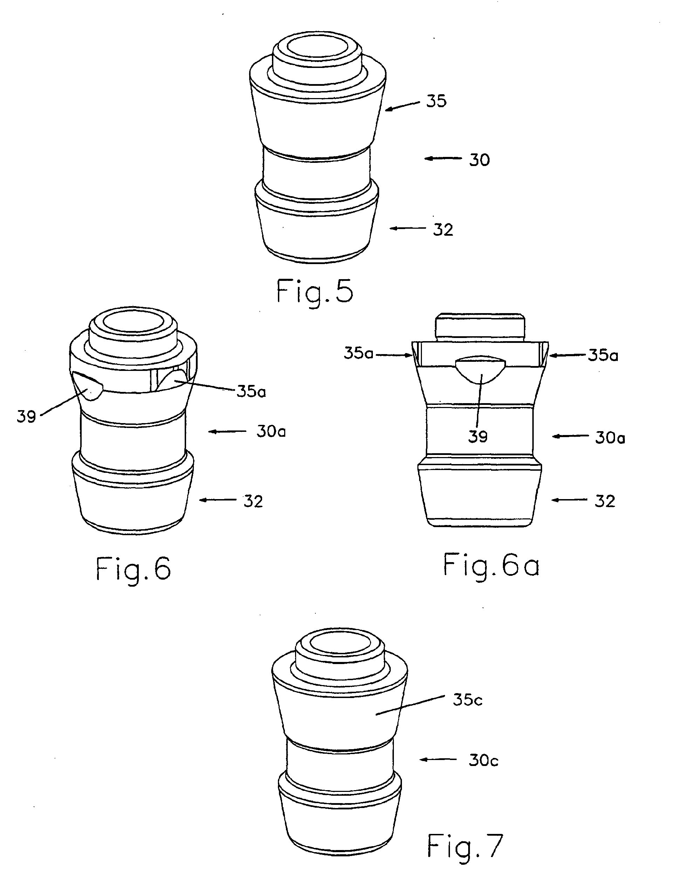

Aus der DE 41 10 857 ist eine Einrichtung zum Kuppeln eines Werkzeughalters mit der Arbeitsspindel einer Werkzeugmaschine bekannt. Die Arbeitsspindel ist zur Aufnahme eines Schaftteils des Werkzeughalters mit einer Aufnahme versehen, die zwischen einem oberen und einem unteren konischen Abschnitt eine ringförmige Ausnehmung mit einer Abstützfläche aufweist. Der Schaftteil des Werkzeughalters ist mit zwei an elastischen Widerlagern abgestützten Konusringen versehen. Zwischen diesen Konusringen ist eine Verriegelungsvorrichtung angeordnet, welche zwei radial verschiebbare Riegelstücke aufweist. Diese Riegelstücke sind auf der Oberseite mit Keilflächen versehen, welche sich beim Verriegeln an der Abstützfläche der ringförmigen Ausnehmung anlegen. Durch das Vorsehen der elastischen Widerlager sind die Konusringe relativ zum Schaftteil in axialer, d.h. in Z-Richtung verschiebbar und ermöglichen ein Hineinziehen des Schaftteils in die Aufnahme, nachdem sich die Konusringe an der Kegelfläche angelegt haben. Die Konusringe selber sind mit Schlitzungen versehen. Der Schaftteil ist mit einem Flanschteil versehen, der auf seiner Unterseite eine ebene, als Z-Anschlag dienende Ringfläche bildet, die beim Festspannen des Schaftteils an der Stirnfläche der Arbeitsspindel zur Anlage kommt. In der Aufnahme der Arbeitsspindel können sowohl herkömmliche Spannzapfen (Fig. 5) wie auch mehrteilige Spannzapfen (Fig. 1 und 3) fixiert werden. Der grundsätzliche Erfindungsgedanke ist somit darin zu sehen, dass an der Arbeitsspindel der Werkzeugmaschine Werkzeughalter mit unterschiedlich gestalteten Spannzapfen befestigt werden können. Es versteht sich, dass sich eine derartige Einrichtung nicht zum hochpräzisen und reproduzierbaren Fixieren eines Werkzeughalters an der Arbeitsspindel einer Werkzeugmaschine eignet.

Die US 5 722 806 zeigt ein Kupplungssystem zum verriegelbaren Kuppeln von Werkzeugmaschinenteilen. Das Kupplungssystem besteht aus einer Steckkupplung, in die eine zentrale Ausnehmung eingelassen ist, und einer Buchsenkupplung, die mit einem umlaufenden, die Steckkupplung zu umfassen bestimmten Vorsprung versehen ist. Sowohl der Vorsprung wie auch die Ausnehmung sind konisch ausgebildet. Zum Verriegeln der beiden Teile ist ein mehrteiliger Spannbackenmechanismus vorgesehen, der mittels eines Antriebskette betätigbar ist. Innerhalb der Spannbacken ist eine Kugel angeordnet, welche mittels einer Druckstange verschiebbar ist und die Spannbacken beim Verschieben aufspreizt bzw. entlastet.

In der US 5 918 870 ist ein Spannsystem offenbart, das aus einem mit einer Mittenbohrung versehenen Schnellspannzylinder besteht, in der ein an einer Palette zu befestigender Einzugsbolzen fixierbar ist. Der Einzugsbolzen weist eine umlaufende Schulter auf, die eine zylindrische Ringfläche zum Zentrieren des Einzugsbolzens in der Mittenbohrung des Schnellspannzylinders bildet.

Die US 5 415 384 schliesslich zeigt ein Spannsystem, mit einem an der Bearbeitungsmaschine zu fixierenden Unterteil und einem daran festspannbaren Werkstückträger. An der Unterseite des Werkstückträgers sind vier Spannzapfen sowie vier mit einem Schlitz versehene Zentrierelemente angeordnet. Auf der Oberseite des Unterteils sind vier Zentrierlineale angeordnet, welche beim Festspannen des mit einem Schlitz versehene Zentrierelemente mit den Zentrierelementen zusammenzuarbeiten bestimmt sind. Die mit einem Schlitz versehenen Zentrierelemente sind in Z-Richtung elastisch nachgiebig. Diese Nachgiebigkeit wird genutzt, um nach dem Ausrichten des Werkstückträgers in X- und Y-Richtung ein Verschieben des Werkstückträgers auch in Z-Richtung zu ermöglichen.

Die Aufgabe der Erfindung besteht nun darin, eine gemäss dem Oberbegriff des Patentanspruchs 1 ausgebildete Spanneinrichtung zu schaffen, deren Spannfutter sich insbesondere für Palettiersysteme eignet, wobei das einzelne Spannfutter sehr robust und stabil sein soll und ein spielfreies Ausrichten des Spannzapfens im Spannfutter in X-und/oder Y-Richtung ermöglichen soll, und wobei nach dem Ausrichten des Spannzapfens in X- und/oder Y-Richtung ein Verschieben des Spannzapfens bzw. des damit verbundenen Werkstückträgers in Z-Richtung ermöglicht werden soll, ohne dass dazu federelastisch nachgiebige Mittel vorgesehen werden müssen.

Diese Aufgabe wird durch die im Anspruch 1 angeführten Merkmale gelöst.

Die der Erfindung zugrunde liegende Idee besteht demnach darin, den Spannzapfen derart zu gestalten, dass sich dieser beim Einführen in die Öffnung des Spannfutters in X-und/oder Y-Richtung spielfrei ausrichten kann, ohne dass der Werkstückträger in Z-Richtung am Spannfutter aufliegt. Während des Ausrichtens des Spannzapfens verbleibt ein kleiner Spalt zwischen der jeweiligen Auflagefläche des Spannfutters und der korrespondierenden Unterseite des Werkstückträgers. Dieser Spalt wird aufgehoben, indem der Spannzapfen beim Festspannen unter Ausnutzung der Materialelastizität des Spannzapfens und/oder des Spannfutters durch den Spannmechanismus weiter in die Öffnung im Spannfutter hineingezogen wird. Dabei verschiebt sich der Werkstückträger soweit in Z-Richtung, bis er mit seiner Unterseite auf der jeweiligen Auflagefläche des Spannfutters aufzuliegen kommt. Indem das Verschieben des Werkstückträgers in Z-Richtung ausschliesslich durch Ausnutzung der Materialelastizität des Spannzapfens und/oder des Spannfutters erfolgt, kann gänzlich auf in Z-Richtung federelastisch nachgiebige Mittel verzichtet werden.

Bevorzugte Ausführungsformen und Weiterbildungen des Erfindungsgegenstandes sind in den abhängigen Ansprüchen 2-21 umschrieben.

Im Anspruch 22 wird zudem eine mit zumindest zwei nach einem der vorhergehenden Ansprüche ausgebildeten Spannfuttern versehene Anordnung beansprucht.

Im folgenden wird ein Ausführungsbeispiel der erfindungsgemässen Einrichtung unter Bezugnahme auf die beiliegenden Zeichnungen näher erläutert. In den Zeichnungen zeigen:
- Fig. 1: eine perspektivische Ansicht eines Spannfutters sowie eines Werkstückträgers;
- Fig. 2: einen ersten Längsschnitt durch das Spannfutter sowie den Werkstückträger;
- Fig. 3: einen Längsschnitt durch das Spannfutter mit aufgesetztem Werkstückträger;
- Fig.4: einen Längsschnitt durch das Spannfutter mit daran fixiertem Werkstückträger;
- Fig. 5 bis 7: drei unterschiedliche Ausführungsformen von Spannzapfen;

- Fig. 8: eine perspektivische Ansicht auf einen Maschinentisch sowie eine Palette, und
- Fig. 8a und 8b: zwei vergrössert dargestellte Spannzapfen gemäss Fig. 8.

Aus der Fig. 1 geht eine schematisch dargestellte Spanneinrichtung in perspektivischer Ansicht hervor. Diese besteht aus einem generell mit 1 bezeichneten Spannfutter sowie einem generell mit 40 bezeichneten Werkstückträger. Am Werkstückträger 40 ist ein Spannzapfen 30 angeordnet, mittels welchem der Werkstückträger 40 am Spannfutter 1 fixierbar ist. Eine derartige Spanneinrichtung dient insbesondere dem positionsdefinierten Aufspannen eines Werkstücks am Arbeitsplatz einer Bearbeitungsmaschine (nicht dargestellt), wobei, wie im vorliegenden Beispiel, der Werkstückträger 40 auch gleichzeitig das Werkstück darstellen kann.

Das an der Bearbeitungsmaschine mit nicht näher dargestellten Mitteln zu fixierende Spannfutter 1 ist mit einer zentralen Öffnung 2 zur Aufnahme und Fixierung des Spannzapfens 30 versehen. Der obere Abschnitt dieser Öffnung 2 ist als konischer Einführbereich 3 ausgebildet. Auf der Oberseite weist das Spannfutter 1 zwei kreisringförmige, koaxial zur Öffnung 2 angeordnete Flächen 5, 6 auf, welche als Z-Anschlag für den Werkstückträger 40 dienen, wobei die innere dieser kreisringförmigen Flächen 5 die Öffnung 2 mit relativ geringem Abstand umschliesst. Der Werkstückträger 40 ist mit einer planen Unterseite 41 versehen, welche gleichzeitig die Z-Auflagefläche bildet. Das Spannfutter 1 ist mit einem Anschluss 4 versehen, durch welchen ein pneumatisches oder hydraulisches Medium zwecks Verriegelung bzw. Entriegelung des Spannfutters zugeführt werden kann.

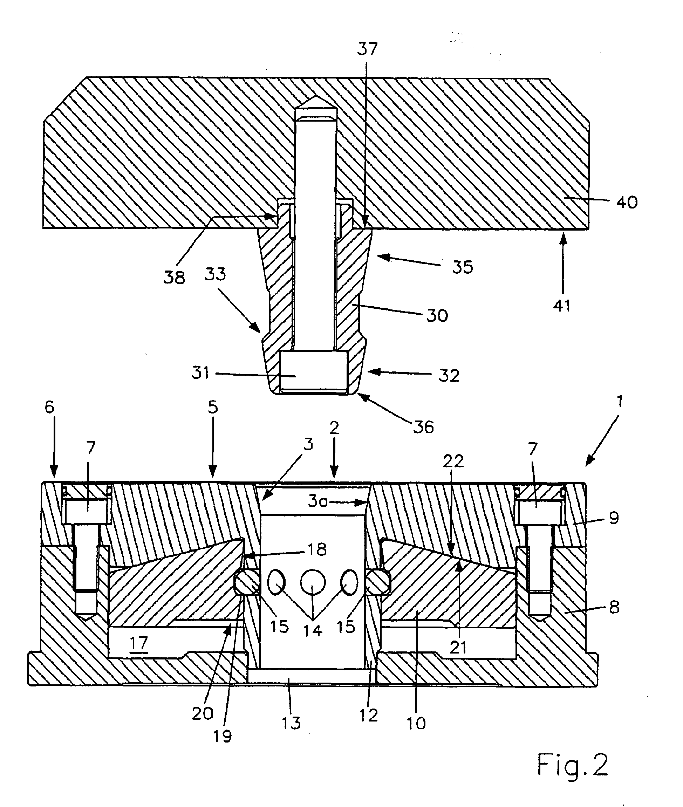

In der Fig. 2 ist das Spannfutter 1 sowie der Werkstückträger 40 in einem Längsschnitt dargestellt. Das Spannfutter 1 umfasst im wesentlichen einen tassenförmig gestalteten Unterteil 8, einen am Unterteil 8 mittels Schrauben 7 befestigten Oberteil 9 und einen dazwischen angeordneten Kolben 10, der mittels vorgespannten Schraubenfedern (nicht ersichtlich) am Oberteil 9 abgestützt ist. Der Oberteil 9 weist einen nach unten gerichteten, hohlzylindrischen Fortsatz 12 auf, der in seinem Innern die zentrale, als durchgehend glatte Bohrung ausgebildete Öffnung 2 begrenzt. Der einstückig mit dem Spannfutter-Oberteil 9 ausgebildete Fortsatz 12 erstreckt sich bis in eine runde, in den Unterteil 8 des Spannfutters 1 eingelassene Ausnehmung 13 hinein.

Der am Werkstückträger 40 befestigte Spannzapfen 30 ist an seinem hinteren Ende mit einer zylindrischen Referenzfläche 38 sowie einer kreisringförmigen Referenzfläche 37 versehen. Mit der kreisringförmigen Referenzfläche 37 stützt sich der Spannzapfen 30 an der planen Unterseite 41 des Werkstückträgers 40 ab, so dass die als Z-Auflage wirkende Unterseite 41 des Werkstückträgers 40 in Bezug auf den Spannzapfen 30 eine definierte Position einnimmt.

Ein Spannmechanismus 20 zum Festspannen des Spannzapfens 30 umfasst nebst dem bereits genannten Kolben 10 und den Schraubenfedern eine Mehrzahl von Spannkugeln 15. Diese Spannkugeln 15 sind in radialen Bohrungen 14, die in den Fortsatz 12 eingelassen sind, aufgenommen. Um den Kolben 10 entgegen der Federkraft in die hier gezeigte obere Endstellung verschieben zu können, ist zwischen dem Unterteil 8 und dem Kolben 10 ein Druckraum 17 vorgesehen, der pneumatisch oder hydraulisch unter Druck gesetzt werden kann. Auf die Darstellung der zum Abdichten des Druckraums 17 notwendigen Dichtungen wurde verzichtet.

Der mittels einer Schraube 31 am Werkstückträger 40 befestigte Spannzapfen 30 ist an seinem vorderen Ende mit einem kegelstumpfförmig ausgebildeten Abschnitt 32 versehen, der an seinem hinteren Ende eine umlaufende Schulter 33 bildet, an welcher sich die Spannkugeln 15 zum Einziehen und Fixieren des Spannzapfens 30 anlegen können. Die Vorderkante 36 des Spannzapfens 30 ist vorzugsweise abgerundet. Im Bereich seines hinteren Endes weist der Spannzapfen 30 einen weiteren, kegelstumpfförmig ausgebildeten Abschnitt 35 auf. Die Konizität sowohl des vorderen Abschnitts 32 wie auch des hinteren Abschnitts 35 ist der Konizität des Einführbereichs 3 der Zentrieröffnung 2 angepasst. Der vordere Abschnitt 32 ist jedoch so ausgebildet, dass dessen minimaler Aussendurchmesser um ca. 5 bis 10 mm kleiner ist, als der grösste Durchmesser des konischen Einführbereichs 3 der zentralen Öffnung 2 des Spannfutters 1. Jedenfalls ist der maximale Durchmesser des vorderen Abschnitts 32 des Spannzapfens 30 grösser als der minimale Durchmesser des hinteren Abschnitts 35. Dadurch wirkt der vordere Abschnitt 32 des Spannzapfens 30 als Grobzentrierung, während der hintere Abschnitt 35 als Feinzentrierung wirkt, mittels welcher der Spannzapfen 30 in X- und Y-Richtung exakt ausgerichtet werden kann.

Um die Spannkugeln 15 radial nach innen in die Wirkstellung verschieben zu können, ist der Kolben 10 mit einer schrägen Druckfläche 18 versehen. Diese Druckfläche 18 ist so gestaltet, dass die Spannkugeln 15 in der Verriegelungsstellung des Kolbens 10 selbsthemmend in der Wirkstellung gehalten werden. Unterhalb dieser Druckfläche 18 weist der Kolben 10 eine ringförmige Nut 19 auf, in die sich die Kugeln 15 in der hier dargestellten Entriegelungsstellung des Kolbens 10 zurückziehen können. In dieser Stellung des Kolbens 10 kann der Zapfen 30 in die Öffnung 2 des Spannfutters 1 eingeführt und auch wieder daraus entfernt werden.

Der Spannfutter-Oberteil 9 weist eine schräg nach aussen verlaufende Unterseite 21 und der Kolben 10 eine korrespondierend dazu verlaufende Oberseite 22 auf. Zusammen mit dem sich bis in den Unterteil 8 des Spannfutters 1 erstreckenden Fortsatz 12 ergibt sich durch diese Gestaltung eine sehr stabile Bauart, mit der hohe Einzugskräfte ohne nennenswerte Verformung des Oberteils 9 erreicht werden können. Der einstückig mit dem Spannfutter-Oberteil 9 ausgebildete Fortsatz 12 stellt zudem sicher, dass hohe Zugkräfte auf den am Spannfutter fixierten Werkstückträger einwirken können, ohne dass sich dieser in axialer Richtung verschiebt, da er, im Gegensatz zu Spannsystemen mit einem separaten Kugelkäfig, in Z-Richtung nicht nachgiebig ist. Zudem wird durch diesen einstückig durchgehenden Fortsatz 12 das Abdichten des Druckraums 17 vereinfacht.

Bevor der Spannzapfen 30 in die Öffnung 2 des Spannfutters 1 eingeführt werden kann, muss der Spannzapfen 30 grob auf die Öffnung 2 ausgerichtet werden. Danach kann der Werkstückträger 40 nach unten abgesenkt werden. Beim Einführen zentriert sich der Spannzapfen 30 zuerst grob, indem sich dieser mit seinem vorderen Abschnitt 32 an der Wandung 3a des Einführbereichs 3 der Zentrieröffnung 2 ausrichtet. Da die Konizität des vorderen Abschnitts 32 mit der Konizität des Einführbereichs 3 der Zentrieröffnung 2 übereinstimmt, ergibt sich, bei horizontal ausgerichtetem Werkstückträger 40, eine linienförmige Berührung zwischen dem vorderen Abschnitt 32 des Spannzapfens 30 an der Wandung 3a des Einführbereichs 3 der Zentrieröffnung 2. Durch eine linienförmige Berührung ist die Beschädigungsgefahr des Spannzapfens 30 bzw. der Zentrieröffnung 2 wesentlich kleiner als bei einer punktförmigen Berührung.

Durch den hinteren, kegelstumpfförmig ausgebildeten Abschnitt 35 des Spannzapfens 30 erfolgt beim weiteren Einführen die Feinzentrierung des Spannzapfens 30 in X- und Y-Richtung. Dabei legt sich der hintere Abschnitt 35 vollflächig an der Wandung 3a des sich konisch verengenden Einführbereichs 3 der zentralen Öffnung 2 an. Die Dimensionierung des Spannzapfens 30 ist so gewählt, dass nach dem Feinzentrieren und vor dem Festspannen des Spannzapfens 30, d.h. wenn die Palette 40 nur mit ihrem Eigengewicht auf dem Spannfutter 1 aufliegt, zwischen den kreisringförmigen, als Z-Anschlag wirkenden Flächen 5, 6 des Spannfutters 1 und der planen Unterseite 41 des Werkstückträgers 40 ein Spalt S in der Grössenordnung von 0.01 bis 0.02 mm besteht, wie dies in der Fig. 3 dargestellt ist. In der Fig. 3 ist der Spalt S zugunsten einer guten Erkennbarkeit übertrieben gross dargestellt. Auf den Spannzapfen 30 bezogen heisst dies, dass die die Z-Referenz bildenden Referenzfläche 37 des Spannzapfens 30 um den genannten Betrag von 0.01 bis 0.02 mm über die als Z-Anschlag dienende(n) Auflagefläche(n) 5, 6 des Spannfutters 1 vorsteht, wenn der Spannzapfen 30 lose, d.h. spannkraftfrei, in die zentrale Öffnung 2 des Spannfutters 1 eingesetzt ist. Je nach Grösse, Ausgestaltung und Dimensionierung der Spanneinrichtung kann dieser Spalt auch in einem weiteren Bereich, beispielsweise zwischen 0.005 und 0.1mm, variieren. Es versteht sich, dass die Unterseite des Werkstückträgers 40 nicht zwingend plan sein muss, sondern dass diese durchaus unterschiedliche Flächen und/oder Ebenen aufweisen kann. Wichtig ist einzig und allein, dass zwischen der/den als Z-Anschlag dienende(n) Auflagefläche(n) 5, 6 des Spannfutters 1 und der jeweiligen, beim Festspannen des Werkstückträgers 40 daran zur Anlage kommenden Fläche des Werkstückträgers 40, im spannkraftfreien Zustand ein Spalt S in der genannten Grössenordnung besteht, so dass sich der Spannzapfen 30 spielfrei in X-und/oder Y-Richtung im Einführbereich 3 der zentralen Öffnung 2 ausrichten kann. Die die Z-Referenz bildende Referenzfläche 37 des Spannzapfens 30 muss zudem nicht zwingend mit der Unterseite 41 des Werkstückträgers 40 zusammenfallen, sondern sie kann, je nach Gestaltung des Spannzapfens 30 und/oder des Werkstückträgers 40 bzw. dessen Unterseite, ggf. auch zurückversetzt sein oder nach unten vorstehen.

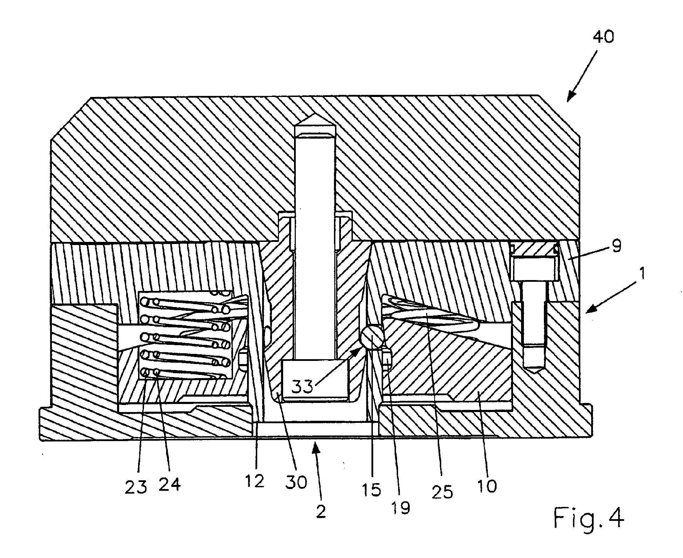

Fig. 4 zeigt das Spannfutter 1 mit daran festgespanntem Werkstückträger 40. Um den lose auf das Spannfutter 1 aufgesetzten Werkstückträger 40 festzuspannen, wird der Druck im Druckraum 17 reduziert, so dass der Kolben 10 durch die Kraft von Federn 23, 25, wie nachstehend noch beschrieben wird, nach unten in die in Fig. 4 dargestellte Position gedrückt wird. Dabei werden die Spannkugeln 15 in bekannter Weise radial nach innen verschoben, wo sie sich an der Schulter 33 des Spannzapfens 30 anlegen und letzteren nach unten ziehen. Durch die hohe axiale Einzugskraft von bis zu 20 KN wird sowohl der Spannzapfen 30 etwas in die Länge gezogen, wodurch sich dessen Aussen-Durchmesser verringert, wie auch der sich konisch verengende Einführbereich 3 der Öffnung 2 etwas aufgeweitet. Dadurch wird der Spannzapfen 30 etwas tiefer in die zentrale Öffnung 2 hineingezogen, so dass sich der Werkstückträger in Z-Richtung nach unten verschiebt und die plane Unterseite 41 des Werkstückträgers 40 auf den als Z-Anschlag wirkenden Flächen 5, 6 des Spannfutters 1 aufzuliegen kommt. Damit ist der Werkstückträger 40 auch in Z-Richtung gegenüber dem Spannfutter 1 positioniert. Das heisst mit anderen Worten: das Ausrichten des Werkstückträgers in X- und Y-Richtung erfolgt spannkraftfrei, während das Verschieben des Werkstückträgers 40 in Z-Richtung ausschliesslich unter Ausnutzung der Materialelastizität des Spannzapfens 30, 30a und des Spannfutters 1 im Bereich der zentralen Öffnung 2 erfolgt.

Die wirkungswesentlichen Elemente der Spanneinrichtung sind bezüglich Dimensionen und Formgebung derart aufeinander abgestimmt, dass das Aufheben des Spalts zwischen der planen Unterseite 41 des Werkstückträgers 40 und den als Z-Anschlag wirkenden Flächen 5, 6 des Spannfutters 1, nach der Feinzentrierung des Spannzapfens 30 in X- und Y-Richtung, praktisch ausschliesslich aufgrund der Materialelastizität des Spannzapfens 30 sowie des Spannfutters 1 im Bereich der zentralen Öffnung 2 erfolgt. Daher brauchen keine in Z-Richtung federelastisch nachgiebigen Elemente, wie sie bei den nach dem Stand der Technik ausgebildeten Spannsystemen zumeist vorhanden sind, vorgesehen zu werden.

Aus der Fig. 4, welche das Spannfutter 1 zusammen mit dem daran festgespannten Werkstückträger 40 in einem Längsschnitt zeigt, sind insbesondere auch die für die Vorspannung des Kolbens 10 vorgesehenen und für die Einzugskraft des Spannzapfens 30 massgebenden Federn 23, 25 ersichtlich. Zur Verdeutlichung der Gestaltung des Spannfutters 1 ist dessen linke Seite in einem Schnitt durch die Schraubenfeder 23 dargestellt, während die rechte Seite des Spannfutters 1 in einem Schnitt zwischen zwei benachbarten Federn dargestellt ist.

Je nach gewünschter Einzugskraft kann natürlich sowohl die Anzahl der Federn 23, 25 wie auch deren Federkraft variiert werden. Für sehr hohe Einzugskräfte können auch doppelte Federn vorgesehen werden, indem, wie aus der linken Darstellung ersichtlich, jeweils zwei Schraubenfedern 23, 24 koaxial ineinander angeordnet werden. Zum Kompensieren von durch die Schraubenfedern auf das Spannfutter-Oberteil 9 ausgeübten Drehmomenten ist die Wicklungsrichtung von einander diametral gegenüberliegenden Schraubenfedern 23, 25 unterschiedlich gewählt. Das Spannfutter 1 ist üblicherweise mit einer Vielzahl von kreisförmig verteilten Schraubenfedern versehen. Beispielsweise hat es sich zum Erreichen von hohen Einzugskräften bewährt, insgesamt 16 Schraubenfedern, 8 äussere und 8 innere, vorzusehen.

Aus der rechten Darstellung in Fig. 4 ist zudem ersichtlich, dass durch den einstückig mit dem Spannfutter-Oberteil 9 ausgebildeten Fortsatz 12 und die in vertikaler Richtung praktisch spielfrei darin geführten Spannkugeln 15 hohe Zugkräfte vom Spannmechanismus aufgenommen werden können.

Um den Werkstückträger 40 vom Spannfutter 1 abnehmen zu können, wird der Kolben 10 pneumatisch oder hydraulisch entgegen der Federkraft nach oben verschoben. Dadurch werden die Spannkugeln 15 entlastet, so dass sie sich radial in die Nut 19 zurückziehen können und der Spannzapfen 30 nach oben aus dem Spannfutter 1 entfernt werden kann. Nach dem Lösen des Spannmechanismus nehmen der Spannzapfen 30 und die zentrale Öffnung 2 des Spannfutters 1 wieder ihre ursprünglichen Dimensionen an, indem sie sich materialelastisch zurückverformen.

Die Figuren 5 bis 7 zeigen drei unterschiedliche Ausführungsformen von Spannzapfen 30, 30a, 30c, welche sich in Kombination zum Ausrüsten einer grossen, mit mehreren Spannzapfen versehenen Palette eignen. Der oberste, gemäss Fig. 5 ausgebildete Spannzapfen 30 entspricht dabei dem bereits vorgängig erläuterten Ausführungsbeispiel, indem am hinteren Ende ein kegelstumpfförmig ausgebildeter Abschnitt 35 zum Zentrieren in X- und Y-Richtung vorgesehen ist. Der mittlere, gemäss Fig. 6 ausgebildete Spannzapfen 30a ist am hinteren Ende, anstelle eines kegelstumpfförmig ausgebildeten Abschnitts, mit zwei einander diametral gegenüberliegenden, kegelstumpfabschnittförmig ausgebildeten Flächenbereichen 35a versehen, wobei aus der Darstellung gemäss Fig. 6 nur der vorne liegende Flächenbereich 35a ersichtlich ist. Aus der Fig. 6a hingegen, welche den Spannzapfen 30a in einer Seitenansicht zeigt, sind beide Flächenbereiche 35a ersichtlich. Mittels dieser Flächenbereiche 35a kann der Zapfen 30a am konischen Einführbereich 3 der Öffnung 2 (Fig. 1) in einer Richtung, vorzugsweise in X- oder in Y-Richtung, ausgerichtet werden. Um den Spannzapfen 30a bzw. dessen Flächenbereiche 35a beim Befestigen am Werkstückträger ausrichten zu können, sind zwei abgeflachte Bereiche 39 zum Ansetzen eines Schraubenschlüssels oder dergleichen vorgesehen. Der unterste Spannzapfen 30c (Fig. 7) schliesslich ist an seinem hinteren Ende ebenfalls mit einem kegelstumpfförmig ausgebildeten Abschnitt 35c versehen. Dieser Abschnitt 35c weist jedoch, im Vergleich mit dem kegelstumpfförmigen Abschnitt 35 des obersten, gemäss Fig. 5 ausgebildeten Spannzapfens, einen um ca. 0.1 bis 0.2 mm geringeren Durchmesser auf. Dadurch wirkt der Spannzapfen 30c als reiner Spannzapfen ohne Zentrierfunktion. Im gespannten Zustand, d.h. wenn die plane Unterseite des Werkstückträgers an den als Z-Anschlag wirkenden Flächen des Spannfutters aufliegt, besteht bei dem Spannzapfen 30c gemäss Fig. 7 zwischen dem kegelstumpfförmig ausgebildeten Abschnitt 35c und dem konischen Einführbereich 3 der Öffnung 2 (Fig. 1) ein Spalt in der Grössenordnung von ca. 0.1 bis 0.2 mm.

Anstelle des in der Fig. 5 dargestellten, kegelstumpfförmig ausgebildeten Abschnitts 35 zum Zentrieren in X- und Y-Richtung könnte der hintere Abschnitt des Spannzapfens 30 auch mit vier um jeweils 90° zueinander versetzen Flächenbereichen zum Ausrichten in X-und Y-Richtung versehen werden.

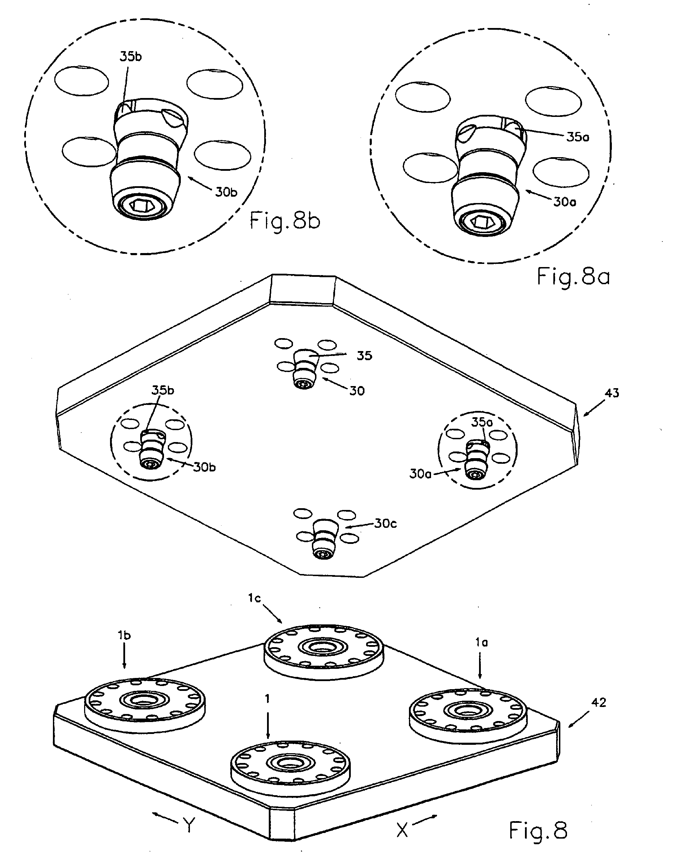

Fig. 8 zeigt eine perspektivische Ansicht eines mit vier Spannfuttern 1, 1a, 1b, 1c versehenen Maschinentischs 42 sowie eines mit vier Spannzapfen 30, 30a, 30b, 30c versehenen Werkstückträgers 43, der nachfolgend als Palette bezeichnet wird. Von den vier Spannzapfen 30, 30a, 30b, 30c entspricht der dem Betrachter zugewandte Spannzapfen 30 demjenigen der Fig. 5, der mit einer kegelstumpfförmigen Fläche 35 zum Ausrichten in X- und Y-Richtung versehen ist. Dieser Spannzapfen 30 legt beim Festspannen der Palette 43 am Maschinentisch 42 den Nullpunkt fest. Die beiden in Betrachtungsrichtung seitlichen, rechten und linken Spannzapfen 30a, 30b sind entsprechend dem Ausführungsbeispiel gemäss Fig. 6 ausgebildet und mit je zwei einander diametral gegenüberliegenden Flächenbereichen 35a, 35b versehen, wobei wiederum nur jeweils der vordere Flächenbereich ersichtlich ist. Der dem Betrachter abgewandte Spannzapfen 30c schliesslich entspricht dem in der Fig. 7 dargestellten Ausführungsbeispiel und dient lediglich dem Festspannen der Palette 43 in Z-Richtung.

Aus der Fig. 8a ist der rechte Spannzapfen 30a und aus der Fig. 8b der linke Spannzapfen 30b in einer vergrösserten Darstellung ersichtlich. Diese beiden Spannzapfen 30a, 30b dienen dem Festlegen der Drehwinkels der Palette 43 um den durch den ersten Spannzapfen 30 definierten Nullpunkt. Die Flächenbereiche 35a des rechten Spannzapfens 30a richten die Palette 43 dabei in Y-Richtung aus, während die Flächenbereiche 35b des linken Spannzapfens 30b die Palette 43 in X-Richtung ausrichten. Wie schon erwähnt, dient der hinterste Spannzapfen 30c lediglich dem Festspannen der Palette 43 in Z-Richtung.

Obwohl bei diesem Ausführungsbeispiel zwei Spannzapfen 30a, 30b zum Festlegen des Drehwinkels der Palette 43 um den Nullpunkt vorgesehen sind, kann es durchaus genügen, nur einen Spannzapfen dafür vorzusehen. Die gezeigte Ausbildung und Anordnung der Spannzapfen hat den Vorteil, dass keine geometrische Überstimmung der Position der Palette beim Festspannen erfolgt, da thermisch bedingte Dimensionsänderungen der Palette von den entsprechenden Spannzapfen aufgenommen bzw. ausgeglichen werden können. Diesbezügliche Versuche haben gezeigt, dass die Zentrierflächenbereiche 35a eines nach dem Ausführungsbeispiel gemäss Fig. 6 ausgebildeten Spannzapfens 30a wärmebedingte Ausdehnungen oder Stichmassdifferenzen der Palette von 0.1 bis 0.2 mm ausgleichen können.

Nebst den vorgängig erläuterten Spannfuttern, welche per se keine Mittel zum Bestimmen der Winkellage um die Z-Achse aufweisen, können durchaus auch einzelne Spannfutter vorgesehen werden, die mit Positionier-Mitteln versehen sind, die nebst der X- und Y-Position auch die Winkellage um die Z-Achse festlegen, so dass ggf. auch Werkstückträger mit einem einzelnen Spannzapfen lage- und winkelgerecht am Spannfutter festgespannt werden können. Es versteht sich, dass in diesem Fall am Werkstückträger korrespondierende Positionier-Mittel angeordnet sind und der Spannzapfen lediglich die Grobzentrierung, nicht jedoch die Feinzentrierung übernimmt. Der Spannzapfen ist in diesem Fall gemäss dem Ausführungsbeispiel nach Fig. 7 ausgebildet.

## Patentansprüche

1. Spanneinrichtung mit einem Spannfutter (1) und einem lösbar daran fixierbaren Werkstückträger (40), wobei das Spannfutter (1) mit einer zentralen Öffnung (2) zur Aufnahme eines am Werkstückträger (40) befestigten Spannzapfens (30, 30a) versehen ist, und wobei die zentrale Öffnung (2) des Spannfutters (1) einen sich konisch verengenden Einführbereich (3) aufweist und der Spannzapfen (30, 30a) mit zumindest einer mit dem Einführbereich (3) korrespondierenden Fläche (35) oder mit mehreren Flächenbereichen (35a) zum spielfreien Ausrichten des Spannzapfens (30, 30a) in X- und/oder Y-Richtung versehen ist, und wobei das Spannfutter mit einem Spannmechanismus (20) zum Fixieren des Spannzapfens (30, 30a) versehen ist und zumindest eine als Z-Anschlag wirkenden Auflagefläche (5, 6) aufweist, **dadurch gekennzeichnet, dass** der Spannzapfen (30, 30a) derart dimensioniert ist, dass nach dessen spannkraftfreiem Ausrichten in X- und/oder Y-Richtung ein Spalt (S) zwischen der jeweiligen Auflagefläche (5, 6) des Spannfutters und der Unterseite (41) des Werkstückträgers (40) verbleibt und der Spannzapfen (30, 30a) danach unter Ausnutzung der Materialelastizität des Spannzapfens (30, 30a) und/oder des Spannfutters (1) im Bereich der zentralen Öffnung (2) durch den Spannmechanismus (20) weiter in die Öffnung (2) hineinziehbar ist, so dass ein Verschieben des Werkstückträgers (40) in Z-Richtung ermöglicht und der Spalt (S) zwischen der jeweiligen Auflagefläche (5, 6) des Spannfutters (1) und der Unterseite (41) des Werkstückträgers (40) aufgehoben wird.

2. Spanneinrichtung nach Anspruch 1, **dadurch gekennzeichnet, dass** der Spalt (S) zwischen der jeweiligen Auflagefläche (5, 6) des Spannfutters und der Unterseite (41) des Werkstückträgers (40) nach dem spannkraftfreiem Ausrichten des Spannzapfens in X-und/oder Y-Richtung zwischen 0.005 und 0.1mm liegt.

3. Spanneinrichtung nach Anspruch 1 oder 2, **dadurch gekennzeichnet, dass** der Spannzapfen (30, 30a) mit einer eine Z-Referenz bildenden Referenzfläche (37) versehen ist, welche nach dem spannkraftfreiem Ausrichten des Spannzapfens in X- und/oder Y-Richtung um 0.005 bis 0.1mm über die als Z-Anschlag dienende(n) Auflagefläche(n) (5, 6) des Spannfutters (1) vorsteht.

4. Spanneinrichtung nach einem der vorhergehenden Ansprüche, **dadurch gekennzeichnet, dass** der Spannzapfen (30) mit einem vorderen als Grobzentrierung ausgebildeten Abschnitt (32) und einem hinteren als Feinzentrierung ausgebildeten Abschnitt (35) versehen ist.

5. Spanneinrichtung nach Anspruch 4, **dadurch gekennzeichnet, dass** der vordere Abschnitt (32) des Spannzapfens (30) kegelstumpfförmig ausgebildet ist.

6. Spanneinrichtung nach einem der vorhergehenden Ansprüche, **dadurch gekennzeichnet, dass** der hintere Abschnitt (35) des Spannzapfens (30) als kegelstumpfförmige Fläche ausgebildet ist, welche den Spannzapfen (30) am konischen Einführbereich (3) der Öffnung (2) des Spannfutters (1) in X- und Y-Richtung auszurichten bestimmt ist.

7. Spanneinrichtung nach Anspruch 4, **dadurch gekennzeichnet, dass** der maximale Durchmesser des vorderen Abschnitts (32) des Spannzapfens (30) grösser ist als der minimale Durchmesser des hinteren Abschnitts (35) des Spannzapfens (30).

8. Spanneinrichtung nach einem der Ansprüche 1 bis 5, **dadurch gekennzeichnet, dass** der hintere Abschnitt des Spannzapfens (30a) mit zwei einander diametral gegenüberliegenden Flächenbereichen (35a) zum Ausrichten in X- oder Y-Richtung versehen ist.

9. Spanneinrichtung nach einem der Ansprüche 1 bis 5, **dadurch gekennzeichnet, dass** der hintere Abschnitt des Spannzapfens mit vier um jeweils 90° zueinander versetzen Flächenbereichen zum Ausrichten in X- und Y-Richtung versehen ist.

10. Spanneinrichtung nach Anspruch 8 oder 9, **dadurch gekennzeichnet, dass** die Flächenbereiche (35a) kegelstumpfabschnittförmig ausgebildet sind.

11. Spanneinrichtung nach Anspruch 1, **dadurch gekennzeichnet, dass** die zentrale Öffnung (2) im Spannfutter (1) als durchgehend glatte Bohrung ausgebildet ist.

12. Spanneinrichtung nach Anspruch 5, **dadurch gekennzeichnet, dass** der minimale Aussen-Durchmesser des vorderen, kegelstumpfförmig ausgebildeten Abschnitts (32) des Spannzapfens (30) zwischen 3 und 15 mm kleiner ist als der maximale Durchmesser des konisch zulaufenden Einführbereichs (3) des Spannfutters (1).

13. Spanneinrichtung nach Anspruch 5, **dadurch gekennzeichnet, dass** die Konizität des vorderen Zentrierabschnitts (32) des Spannzapfens (30) mit der Konizität des Einführbereichs (3) des Spannfutters (1) korrespondiert.

14. Spanneinrichtung nach einem der vorhergehenden Ansprüche, **dadurch gekennzeichnet, dass** der Spannzapfen (30) mit einer umlaufenden Schulter (33) versehen ist und der Spannmechanismus (20) eine Mehrzahl von (15) sowie einen Betätigungskolben (10) aufweist, welch letzterer zum radialen Verschieben der Spannkugeln (15) von einer Entlastungs- in eine Wirkstellung bringbar ist, in der die Kugeln (15) den Spannzapfen (30) an der Schulter (33) fixieren.

15. Spanneinrichtung nach Anspruch 14, **dadurch gekennzeichnet, dass** der Kolben (10) axial beweglich zwischen einem Spannfutter-Oberteil (9) und einem Spannfutter-Unterteil (8) aufgenommen ist, und dass der Kolben (10) mittels am Oberteil (9) abgestützten Federn (23, 25) in Richtung des Spannfutter-Unterteils (8) vorgespannt ist.

16. Spanneinrichtung nach Anspruch 14, **dadurch gekennzeichnet, dass** der Kolben (10) pneumatisch oder hydraulisch entgegen der Vorspannkraft der Federn (23, 25) von einer Verriegelungsstellung in eine Entriegelungsstellung verschiebbar ist.

17. Spanneinrichtung nach Anspruch 15 oder 16, **dadurch gekennzeichnet, dass** das Spannfutter-Oberteil (9) mit einem hohlzylindrischen Fortsatz (12) versehen ist, der in seinem Innenraum die zentrale Öffnung (2) zur Aufnahme des Spannzapfens (30) bildet und der mit radialen Bohrungen (14) zur Aufnahme der Spannkugeln (15) versehen ist.

18. Spanneinrichtung nach Anspruch 17, **dadurch gekennzeichnet, dass** der hohlzylindrische Fortsatz (12) bis an das Spannfutter-Unterteil (8) heranreicht.

19. Spanneinrichtung nach einem der Ansprüche 15 bis 18, **dadurch gekennzeichnet, dass** zumindest zwei einander diametral gegenüberliegende Schraubenfedern (23, 25) zum Vorspannen des Kolbens (10) vorgesehen sind, wobei die Wicklungsrichtung von einander diametral gegenüberliegenden Schraubenfedern (23, 25) unterschiedlich ist.

20. Spanneinrichtung nach Anspruch 19, **dadurch gekennzeichnet, dass** jeweils zwei Schraubenfedern (23, 24) koaxial ineinander angeordnet sind.

21. Spanneinrichtung nach einem der vorhergehenden Ansprüche, **dadurch gekennzeichnet, dass** die dem Kolben (10) zugewandte Unterseite (21) des Spannfutter-Oberteils (9) von der Innenseite her radial-schräg nach unten verläuft.

22. Anordnung mit zumindest zwei nach einem der vorhergehenden Ansprüche ausgebildeten Spannfuttern (1), **dadurch gekennzeichnet, dass** ein mit einer Mehrzahl von Spannzapfen (30, 30a, 30b, 30c) versehener Werkstückträger (43) vorgesehen ist, wobei einer der Spannzapfen (30) zum Festlegen der Lage des Werkstückträgers (43) in X- und Y-Richtung und zumindest ein weiterer Spannzapfen (30a, 30b) zur Festlegung der Winkellage des Werkstückträgers (43) um die Z-Achse vorgesehen ist.

23. Anordnung nach Anspruch 22, **dadurch gekennzeichnet, dass** der zumindest ein weiterer Spannzapfen (30a, 30b) nur zum Ausrichten in X- oder in Y-Richtung vorgesehen ist, indem der hintere Abschnitt des Spannzapfens (30a, 30b) mit zwei einander diametral gegenüberliegenden Flächenbereichen (35a, 35b) versehen ist.

## Claims

1. A clamping fixture including a chuck (1) and a workpiece pallet (40) releasably fixed thereto, said chuck (1) being provided with a central opening (2) for receiving a chucking spigot (30, 30a) secured to the workpiece pallet (40) and the central opening (2) of the chuck (1) comprising a conically tapered guide-in portion (3) and the chucking spigot (30, 30a) being provided with at least one face (35) corresponding to the guide-in portion (3) or with numerous face portions (35a) for dead true orientation of the chucking spigot (30, 30a) in the X and/or Y direction and the chuck (1) being provided with a clamping mechanism (20) for locking the chucking spigot (30, 30a) in place and at least one seating face (5, 6) acting as a Z stop,
**characterized in that** said chucking spigot (30, 30a) is dimensioned such that after its orientation in the X and/or Y direction free of any clamping force a gap (S) remains between each seating face (5, 6) of the chuck (1) and the underside (41) of the workpiece pallet (40) and after which the chucking spigot (30, 30a) is further retractable into the central opening (2) in exploiting the material elasticity of the chucking spigot (30, 30a) and/or of the chuck (1) in the region of the central opening (2) by the clamping mechanism (20) in thus permitting a shift in the position of the workpiece pallet (40) in the Z direction and in eliminating the gap (S) between each seating face (5, 6) of the chuck (1) and the underside (41) of the workpiece pallet (40).

2. The clamping fixture as set forth in claim 1, **characterized in that** said gap (S) between each seating face (5, 6) of the chuck (1) and the underside (41) of the workpiece pallet (40) ranges from 0.005 to 0.1 mm after orientation of the chucking spigot in the X and/or Y direction free of any clamping force.

3. The clamping fixture as set forth in claim 1 or 2, **characterized in that** said chucking spigot (30, 30a) is provided with a reference face (37) imaging a Z reference, the reference face (37) protruding 0.005 to 0. 1 mm beyond the seating face (5, 6) of the chuck (1) serving as the Z stop after orientation of the chucking spigot in the X and/or Y direction free of any clamping force.

4. The clamping fixture as set forth in any of the preceding claims, **characterized in that** said chucking spigot (30) is provided with a front portion (32) configured for coarse centering and a rear portion (35) configured for fine centering.

5. The clamping fixture as set forth in claim 4, **characterized in that** said front portion (32) of the chucking spigot (30) is configured as a truncated cone.

6. The clamping fixture as set forth in any of the preceding claims, **characterized in that** said rear portion (35) of the chucking spigot (30) is configured as a truncated cone face designated to orient the chucking spigot (30) at the guide-in portion (3) of the central opening (2) of the chuck (1) in the X and Y direction.

7. The clamping fixture as set forth in claim 4, **characterized in that** said maximum diameter of the front portion (32) of the chucking spigot (30) is greater than the minimum diameter of the rear portion (35) of the chucking spigot (30).

8. The clamping fixture as set forth in any of the claims 1 to 5, **characterized in that** said rear portion of the chucking spigot (30a) is provided with two diametrally opposed face portions (35a) for orientation in the X or Y direction.

9. The clamping fixture as set forth in any of the claims 1 to 5, **characterized in that** said rear portion of the chucking spigot is provided with four face portions each offset by 90° from the other for orientation in the X and Y direction.

10. The clamping fixture as set forth in claim 8 or 9, **characterized in that** said face portions (35a) are configured as truncated cone portions.

11. The clamping fixture as set forth in claim 1, **characterized in that** said central opening (2) in the chuck (1) is configured as a full-length smooth hole.

12. The clamping fixture as set forth in claim 5, **characterized in that** said minimum outer diameter of the truncated cone configured front portion (32) of the chucking spigot (30) is 3 to 15 mm smaller than the maximum diameter of the conically tapered guide-in portion (3) of the chuck (1).

13. The clamping fixture as set forth in claim 5, **characterized in that** the conicity of said front centering portion (32) of the chucking spigot (30) corresponds to the conicity of the guide-in portion (3) of the chuck (1).

14. The clamping fixture as set forth in any of the preceding claims, **characterized in that** said chucking spigot (30) is provided with a circumferential shoulder (33) and the clamping mechanism (20) comprises a plurality of clamping balls (15) as well as an actuating plunger (10), the latter, for radially shifting the clamping balls (15) being bringable from a disabled position into an enabled position in which the clamping balls (15) locate the chucking spigot (30) at the shoulder (33).

15. The clamping fixture as set forth in claim 14, **characterized in that** said plunger (10) is mounted for axial motion between a chuck topper (9) and a chuck bottomer (8), and that the plunger (10) is preloaded by means of springs (23, 25) supported by the chuck topper (9) in the direction of the chuck bottomer (8).

16. The clamping fixture as set forth in claim 14, **characterized in that** said plunger (10) is displacable pneumatically or hydraulically against the preloading force of the springs (23, 25) from a locked position into an unlocked position.

17. The clamping fixture as set forth in claim 15 or 16, **characterized in that** said chuck topper (9) is provided with a tubular extension (12) forming in its interior the central opening (2) for receiving the chucking spigot (30) and which is provided with radial holes (14) to accommodate the clamping balls (15).

18. The clamping fixture as set forth in claim 17, **characterized in that** said tubular extension (12) extends as far as the chuck bottomer (8).

19. The clamping fixture as set forth in any of the claims 15 to 18, **characterized in that** at least two diametrally opposed helical springs (23, 25) for pretensioning the actuating plunger (10) are provided, whereby the winding direction of the diametrally opposed helical springs (23, 25) is diverse one from the other.

20. The clamping fixture as set forth in claim 19, **characterized in that** two each of said helical springs (23, 25) are arranged coaxial in each other.

21. The clamping fixture as set forth in any of the preceding claims, **characterized in that** said underside (21) of the chuck topper (9) facing the actuating plunger (10) is oriented radially skewed downwards from the inside.

22. An arrangement comprising at least two chucks (1) configured as set forth in any of the preceding claims, **characterized in that** a workpiece pallet (43) provided with a plurality of chucking spigots (30, 30a, 30b, 30c) is provided, one chucking spigot (30) of which is provided to define the location of the workpiece pallet (43) in the X and Y direction and at least one further chucking spigot (30a, 30b) is provided to define the angular location of the workpiece pallet (43) about the Z axis.

23. The arrangement as set forth in claim 22, **characterized in that** said at least one further chucking spigot (30a, 30b) is provided solely for alignment in the X or in the Y direction by the rear portion of the chucking spigot (30a, 30b) being provided with two diametrally opposed face portions (35a, 35b).

## Revendications

1. Dispositif de serrage comprenant un mandrin de serrage (1) et un porte-pièce (40) pouvant être fixé à ce dernier de manière amovible, sachant que le mandrin de serrage (1) est pourvu d'une ouverture (2) centrale servant à recevoir un tourillon de serrage (30, 30a) fixé au niveau du porte-pièce (40), et sachant que l'ouverture (2) centrale du mandrin de serrage (1) présente une zone d'introduction (3) se rétrécissant à la manière d'un cône et que le tourillon de serrage (30, 30a) est pourvu d'au moins une surface (35) correspondant à la zone d'introduction (3) ou de plusieurs zones de surface (35a) servant à orienter sans jeu le tourillon de serrage (30, 30a) dans la direction X et/ou Y, et sachant que le mandrin de serrage est pourvu d'un mécanisme de serrage (20) servant à fixer le tourillon de serrage (30, 30a) et présente au moins une surface d'appui (5, 6) agissant en tant que butée Z, **caractérisé en ce que** le tourillon de serrage (30, 30a) est dimensionné de telle manière qu'une fente (S) située entre la surface d'appui (5, 6) respective du mandrin de serrage et le côté inférieur (41) du porte-pièce (40) reste après l'orientation du tourillon de serrage réalisée sans force de serrage dans la direction X et/ou Y et qu'après le tourillon de serrage (30, 30a) peut être encore enfoncé dans l'ouverture (2) par le mécanisme de serrage (20) en optimisant l'élasticité du matériau du tourillon de serrage (30, 30a) et/ou du mandrin de serrage (1) dans la zone de l'ouverture (2) centrale de sorte qu'un déplacement par coulissement du porte-pièce (40) dans la direction Z est rendu possible et que la fente (S) située entre la surface d'appui (5, 6) respective du mandrin de serrage (1) et le côté inférieur (41) du porte-pièce (40) est supprimée.

2. Dispositif de serrage selon la revendication 1, **caractérisé en ce que** la fente (S) située entre la surface d'appui (5, 6) respective du mandrin de serrage et le côté inférieur (41) du porte-pièce (40) est comprise, après l'orientation sans force de serrage du tourillon de serrage dans la direction X et/ou Y, entre 0,005 et 0,1 mm.

3. Dispositif de serrage selon la revendication 1 ou 2, **caractérisé en ce que** le tourillon de serrage (30, 30a) est pourvu d'une surface de référence (37) formant une référence Z, laquelle surface de référence fait saillie, après l'orientation sans force de serrage du tourillon de serrage dans la direction X et/ou Y, d'une longueur comprise entre 0,005 et 0,1 mm de la surface d'appui (5, 6) du mandrin de serrage (1) faisant office de butée Z.

4. Dispositif de serrage selon l'une quelconque des revendications précédentes, **caractérisé en ce que** le tourillon de serrage (30) est pourvu d'une section avant (32) réalisée sous la forme d'un centrage sommaire et d'une section arrière (35) réalisée sous la forme d'un centrage précis.

5. Dispositif de serrage selon la revendication 4, **caractérisé en ce que** la section avant (32) du tourillon de serrage (30) est réalisée de manière à présenter la forme d'un cône tronqué.

6. Dispositif de serrage selon l'une quelconque des revendications précédentes, **caractérisé en ce que** la section arrière (35) du tourillon de serrage (30) est réalisée sous la forme d'une surface présentant une forme de cône tronqué, laquelle surface est destinée à orienter dans la direction X ou Y le tourillon de serrage (30) au niveau de la zone d'introduction (3) conique de l'ouverture (2) du mandrin de serrage (1).

7. Dispositif de serrage selon la revendication 4, **caractérisé en ce que** le diamètre maximum de la section avant (32) du tourillon de serrage (30) est plus grand que le diamètre minimal de la section arrière (35) du tourillon de serrage (30).

8. Dispositif de serrage selon l'une quelconque des revendications 1 à 5, **caractérisé en ce que** la section arrière du tourillon de serrage (30a) est pourvue de deux zones de surface (35a) diamétralement opposées l'une à l'autre, servant à l'orientation dans la direction X ou Y.

9. Dispositif de serrage selon l'une quelconque des revendications 1. à 5, **caractérisé en ce que** la section arrière du tourillon de serrage est pourvue de quatre zones de surface servant à l'orientation dans la direction X et Y et décalées les unes des autres de respectivement 90°

10. Dispositif de serrage selon la revendication 8 ou 9, **caractérisé en ce que** les zones de surface (35a) sont réalisées sous la forme d'une section présentant une forme de cône tronqué.

11. Dispositif de serrage selon la revendication 1, **caractérisé en ce que** l'ouverture (2) centrale est réalisée sous la forme d'un alésage lisse en continu dans le mandrin de serrage (1).

12. Dispositif de serrage selon la revendication 5, **caractérisé en ce que** le diamètre extérieur minimal de la section avant (32), réalisée sous la forme d'un cône tronqué, du tourillon de serrage (30) est plus petit entre 3 et 15 mm que le diamètre maximal de la zone d'introduction (3), s'étendant de manière conique, du mandrin dé serrage (1).

13. Dispositif de serrage selon la revendication 5, **caractérisé en ce que** la conicité de la section de centrage avant (32) du tourillon de serrage (30) correspond à la conicité de la zone d'introduction (3) du mandrin de serrage (1).

14. Dispositif de serrage selon l'une quelconque des revendications précédentes, **caractérisé en ce que** le tourillon de serrage (30) est pourvu d'un épaulement (33) périphérique, et **en ce que** le mécanisme de serrage (20) présente une pluralité de billes de serrage (15) ainsi qu'un piston d'actionnement (10), lequel peut être amené d'une position de décharge dans une position active aux fins du déplacement radial par coulissement des billes de serrage (15), les billes (15) fixant le tourillon de serrage (30) au niveau de l'épaulement (33) dans ladite position active.

15. Dispositif de serrage selon la revendication 14, **caractérisé en ce que** le piston (10) est logé de manière axialement mobile entre une partie supérieure du mandrin de serrage (9) et une partie inférieure du mandrin de serrage (8), et **en ce que** le piston (10) est précontraint au moyen de ressorts (23, 25) s'appuyant sur la partie supérieure (9) dans la direction de la partie inférieure du mandrin de serrage (8).

16. Dispositif de serrage selon la revendication 14, **caractérisé en ce que** le piston (10) peut être déplacé par coulissement depuis une position de verrouillage dans une position de déverrouillage pneumatiquement ou hydrauliquement à l'encontre de la force de précontrainte des ressorts (23, 25).

17. Dispositif de serrage selon la revendication 15 ou 16, **caractérisé en ce que** la partie supérieure du mandrin de serrage (9) est pourvue d'un prolongement (12) cylindrique creux, lequel forme dans son espace intérieur l'ouverture (2) centrale servant à recevoir le tourillon de serrage (30) et qui est pourvu d'alésages (14) radiaux servant à recevoir les billes de serrage (15).

18. Dispositif de serrage selon la revendication 17, **caractérisé en ce que** le prolongement (12) cylindrique creux atteint la partie inférieure du mandrin de serrage (8).

19. Dispositif de serrage selon l'une quelconque des revendications 15 à 18, **caractérisé en ce qu'**au moins deux ressorts hélicoïdaux (23, 25) opposés l'un à l'autre diamétralement sont prévus pour précontraindre le piston (10), sachant que la direction d'enroulement des ressorts hélicoïdaux (23, 25) diamétralement opposés l'un à l'autre est différente.

20. Dispositif de serrage selon la revendication 19, **caractérisé en ce que** respectivement deux ressorts hélicoïdaux (23, 24) sont disposés l'un dans l'autre de manière coaxiale.

21. Dispositif de serrage selon l'une quelconque des revendications précédentes, **caractérisé en ce que** le côté inférieur (21), tourné vers le piston (10), de la partie supérieure du mandrin de serrage (9) s'étend du côté intérieur vers le bas de manière radialement oblique.

22. Ensemble comprenant au moins deux mandrins de serrage (1) réalisés selon l'une quelconque des revendications précédentes, **caractérisé en ce qu'**un porte-pièce (43) pourvu d'une multitude de tourillons de serrage (30, 30a, 30b, 30c) est prévu, sachant qu'un des tourillons de serrage (30) est prévu pour fixer la position du porte-pièce (43) dans la direction X et Y et qu'au moins un autre tourillon de serrage (30a, 30b) est prévu pour fixer la position angulaire du porte-pièce (43) autour de l'axe Z.

23. Ensemble selon la revendication 22, **caractérisé en ce que** le tourillon de serrage (30a, 30b) supplémentaire au moins au nombre de un est prévu uniquement pour l'orientation dans la direction X ou Y en ce que la section arrière du tourillon de serrage (30a, 30b) est pourvue de deux zones de surface (35a, 35b) diamétralement opposées l'une à l'autre.
